# EUROPEAN PATENT APPLICATION

(11) **EP 2 372 943 A1**
(43) Date of publication of application: **05.10.2011**
(21) Application number: 09834259.5
(22) Date of filing: 02.10.2009
(51) Int. Cl.: H04L 7/00, H04W 56/00

(54) **SYNCHRONIZATION DEVICE, RECEPTION DEVICE, SYNCHRONIZATION METHOD, AND RECEPTION METHOD**

(30) Priority: 26.12.2008 JP 2008332752
(71) Applicant: Sharp Kabushiki Kaisha, Osaka-shi, Osaka 545-8522 (JP)
(72) Inventor: KOBAYASHI, Hirokazu c/o SHARP KABUSHIKI KAISHA, Osaka-shi, Osaka 545-8522 (JP); HIKOSO, Keiji c/o SHARP KABUSHIKI KAISHA, Osaka-shi, Osaka 545-8522 (JP); SAWADA, Hirokazu c/o SHARP KABUSHIKI KAISHA, Osaka-shi, Osaka 545-8522 (JP); KUKIMOTO, Shusaku c/o SHARP KABUSHIKI KAISHA, Osaka-shi, Osaka 545-8522 (JP); ISHIKURA, Katsutoshi c/o SHARP KABUSHIKI KAISHA, Osaka-shi, Osaka 545-8522 (JP)
(74) Representative: Müller - Hoffmann & Partner
(86) International application number: PCT/JP2009/005107
(87) International publication number: WO 2010/073441

(57) **Abstract**

A synchronization device including a plurality of counter sections each outputting a numerical signal indicating a counted number by detecting a clock, the synchronization device includes: a first counter section which outputs the numerical signal; a counter synchronization signal output section which outputs a counter synchronization signal indicating the same number as the number indicated by the numerical signal output by the first counter section; and a second counter section which outputs a numerical signal indicating the same number at the same timing as that of the first counter section based on the number indicated by the counter synchronization signal output by the counter synchronization signal output section.

## Description

### TECHNICAL FIELD

The present invention relates to a synchronization device, a reception device, a synchronization method, and a reception method.
This application claims priority to and the benefits of Japanese Patent Application No. 2008-332752 filed on December 26, 2008, the disclosure of which is incorporated herein by reference.

### BACKGROUND ART

In the related art, when communication is established in a communication system of a mobile phone network or the like, a mobile phone device is synchronized with a reference timing indicating a boundary of a frame, a symbol, or the like obtained from a synchronization channel upon a cell search for searching for a cell of an unknown base station device. The mobile phone device starts up a clock counter inside the mobile phone device to detect the reference timing of a frame, a symbol, or the like, and is synchronized with a transmission signal transmitted from a base station device based on a counter value counted by the clock counter. Likewise, the mobile phone device is also synchronized with a reference timing obtained from a known signal from the base station device in terms of synchronization during normal communication or an intermittent operation.

When communication is performed in one communication scheme, for example, wideband-code division multiple access (W-CDMA), the mobile phone device performs a cell search by a synchronization channel (SCH) signal and performs reception processing by acquiring synchronization with a transmission signal by a pilot signal. In the case, the mobile phone device starts up a clock counter, performs synchronization with a transmission signal transmitted by the base station device based on a counter value counted by the clock counter, and performs reception processing of detecting a signal.
In the reception processing, a reception processing section including a reception section, which detects a signal, and the clock counter is normally implemented by a large scale integration (LSI) of one chip.

In recent communication systems, a network to which a plurality of different communication schemes are applied, for example, a mobile phone network to which a W-CDMA scheme and a global system for mobile communications (GSM) scheme are applied, has been studied.

In the communication system, a chip for each communication scheme is mounted as an LSI of one chip, which is a reception processing section corresponding to the W-CDMA scheme and an LSI of one chip, which is a reception processing section corresponding to the GSM scheme, in a mobile phone device. A study on mounting LSIs of a total of two or more chips has been carried out. A mobile phone device equipped with LSIs of two chips performs reception processing of a transmission signal by starting up an LSI capable of performing reception processing corresponding to a communication scheme of a base station device. Specifically, the mobile phone device performs signal reception processing by detecting a reference timing using a transmission signal of each communication scheme and operating a clock counter by each LSI.

Because the mobile phone device independently operates clock counters of the respective LSIs, their counter values do not necessarily match. For reduction of power consumption, when a signal of only one communication scheme is received, the mobile phone device may stop an LSI corresponding to the other communication scheme. In the case, because startup timings are different, the counter values output by the clock counters of the respective LSIs do not necessarily match.

On the other hand, in the communication system, a plurality of base station devices may perform synchronization in a frame, which is a predetermined time unit, and a frame cycle including N frames, where N is predetermined, and transmit respective transmission signals. That is, a base station device that transmits a signal of the W-CDMA scheme, and a base station device that transmits a signal of the GSM scheme may perform synchronization in the frame and the frame cycle and transmit respective transmission signals.

When simultaneous communication with the base station device of the W-CDMA scheme and the base station device of the GSM scheme, which perform synchronization as described above, is performed, for example, when handover processing of switching a communication destination from the base station device of the W-CDMA scheme to the base station device of the GSM scheme is performed, the clock counter of each LSI outputs the same counter value at the same timing as a detection result of the reference timing by the transmission signal of each communication scheme in the above-described mobile phone device.

Patent Document 1 discloses a semiconductor integrated circuit that forcibly resets a counter value of a clock counter again using the reset of the clock counter by an external reset signal as momentum as technology for causing clock counters within two semiconductor integrated circuits to output the same counter value at the same timing. Patent Document 1 discloses synchronization of clock measurement start periods of two clock counters by simultaneously resetting the clock counters of two semiconductor integrated circuits again by the external reset signal when the two semiconductor integrated circuits are used.

Patent Document 1: Japanese Unexamined Patent Application, First Publication No. H11-202967

### DISCLOSURE OF INVENTION

### Problem to be Solved by the Invention

However, even when the technology disclosed in Patent Document 1 is used for other purposes, there is a problem in that synchronization with a transmission signal already acquired is not acquired in one clock counter when two clock counters are reset if a counter value of the one clock counter is already used in synchronization, for example, if the counter value of the one clock counter is used in synchronization with the transmission signal.

The present invention has been made in view of the above-described points, and an object of the invention is to provide a synchronization device, a reception device, a synchronization method, and a reception method, which can set counter values output by a plurality of clock counters to the same value in a state in which synchronization is maintained if a counter value of one clock counter is already used in the synchronization.

### Means for Solving the Problem

(1) The present invention is made to solve the above-mentioned problems. In an aspect of the present invention, there is provided a synchronization device including a plurality of counter sections each outputting a numerical signal indicating a counted number by detecting a clock, the synchronization device including: a first counter section which outputs the numerical signal; a counter synchronization signal output section which outputs a counter synchronization signal indicating the same number as the number indicated by the numerical signal output by the first counter section; and a second counter section which outputs a numerical signal indicating the same number at the same timing as that of the first counter section based on the number indicated by the counter synchronization signal output by the counter synchronization signal output section.
According to the above-described configuration, because a counter synchronization signal indicating the same number as a number indicated by a numerical signal output by the first counter section is output and the second counter section outputs a numerical signal indicating the same number at the same timing as that of the first counter section based on the number indicated by the counter synchronization signal, the synchronization device can set the number indicated by the numerical signal of the second counter section to the same number as the number indicated by the numerical signal of the first counter section in a state in which synchronization is maintained if the number indicated by the numerical signal of the first counter section is already used in the synchronization.

(2) In another aspect of the present invention, there is provided a reception device, which receives a first transmission signal transmitted from a first transmission device and a second transmission signal transmitted from a second transmission device by acquiring synchronization of a time unit with the first transmission signal as a second transmission signal configured in the same time unit as that of the first transmission signal, the reception device including: a first counter section which outputs a numerical signal indicating a counted number by detecting a clock of the time unit; a counter synchronization signal output section which outputs a counter synchronization signal indicating the same number as the numerical signal output by the first counter section; a second counter section which outputs a numerical signal indicating the same number at the same timing as that of the first counter section based on the number indicated by the counter synchronization signal output by the counter synchronization signal output section; a first reception section which detects the first transmission signal in the time unit using the numerical signal output by the first counter section; and a second reception section which detects the second transmission signal in the time unit using the numerical signal output by the second counter section.
According to the above-described configuration, because a counter synchronization signal indicating the same number as a number indicated by a numerical signal output by the first counter section is output, the second counter section outputs a numerical signal indicating the same number at the same timing as that of the first counter section based on the number indicated by the counter synchronization signal, and the second transmission signal is detected in the time unit using the numerical signal output by the second counter section, the reception device can acquire synchronization with the second transmission signal, even when the time unit is not detected using the second transmission signal when the second transmission signal synchronized with the first transmission signal in the time unit is received, and shorten a detection time of the time unit.

(3) In the aspect of the present invention, the counter synchronization signal output section may output a timing signal indicating a synchronization timing to the second counter section, and cause a counter value storage section to store the same number as the number indicated by the numerical signal output by the first counter section, and the second counter section may output the numerical signal indicating the number stored in the counter value storage section at the synchronization timing indicated by the timing signal.

(4) In the aspect of the present invention, the reception device may receive the transmission signals repeated cyclically in a predetermined number of the time units, the first counter section may output a numerical signal indicating the cyclically counted number, and the counter synchronization signal output section may output the counter synchronization signal in each cycle.

(5) In the aspect of the present invention, the counter synchronization signal output section may output the counter synchronization signal indicating a first counted number of the cycle.

(6) In the aspect of the present invention, the counter synchronization signal output section may output the counter synchronization signal in each time unit.

(7) In the aspect of the present invention, the reception device may include: a counter synchronization start control section which performs synchronization start control to cause the second counter section to start to output the numerical signal when the reception device performs handover processing of switching a communication destination from the first transmission device to the second transmission device, wherein the counter synchronization signal output section may output the counter synchronization signal to the second counter section when the counter synchronization start control section performs the synchronization start control.

(8) In the aspect of the present invention, the counter synchronization signal output section may output the counter synchronization signal to the second counter section once.

(9) In the aspect of the present invention, the reception device may include: a startup control section which controls the second counter section to be started up when the reception device performs handover processing of switching a communication destination from the first transmission device to the second transmission device.

(10) In still another aspect of the present invention, there is provided a synchronization method for use in a synchronization device including a plurality of counter sections each outputting a numerical signal indicating a counted number by detecting a clock, the synchronization method including: a first process of outputting, by the synchronization device, the numerical signal; a second process of outputting, by the synchronization device, a counter synchronization signal indicating the same number as the number indicated by the numerical signal output in the first process; and a third process of outputting, by the synchronization device, a numerical signal indicating the same number at the same timing as that of the first process based on the number indicated by the counter synchronization signal output in the second process.

(11) In still another aspect of the present invention, there is provided a reception method for use in a reception device, which receives a first transmission signal transmitted from a first transmission device and a second transmission signal transmitted from a second transmission device by acquiring synchronization of a time unit with the first transmission signal as a second transmission signal configured in the same time unit as that of the first transmission signal, the reception method including: a first process of outputting a numerical signal indicating a counted number by detecting a clock of the time unit; a second process of outputting a counter synchronization signal indicating the same number as the numerical signal output in the first process; a third process of outputting a numerical signal indicating the same number at the same timing as that of the first process based on the number indicated by the counter synchronization signal output in the second process; a fourth process of detecting the first transmission signal in the time unit using the numerical signal output in the first process; and a fifth process of detecting the second transmission signal in the time unit using the numerical signal output in the third process.

### Effect of the Invention

According to the present invention, if a number indicated by a numerical signal of a first counter section is already used in synchronization, it is possible to synchronize with a number indicated by a numerical signal of a second counter section in a state in which the synchronization is maintained. When a second transmission signal synchronized with a first transmission signal in a time unit is received, it is possible to synchronize with the second transmission signal, even when the time unit is not detected using the second transmission signal, and shorten a detection time of the time unit.

### BRIEF DESCRIPTION OF THE DRAWINGS

FIG. 1 is a diagram schematically illustrating the overall image of a communication system according to an embodiment of the present invention.
FIG. 2 is a schematic block diagram showing a configuration of an information terminal device according to the embodiment.
FIG. 3 is an illustrative diagram illustrating an example of a counter synchronization signal according to the embodiment.
FIG. 4 is a flowchart showing an operation of an information terminal device a1 according to the embodiment.
FIG. 5 is an illustrative diagram illustrating another example of the counter synchronization signal according to a modified example 1 of the embodiment.
FIG. 6 is an illustrative diagram illustrating another example of the counter synchronization signal according to a modified example 2 of the embodiment.
FIG. 7 is an illustrative diagram illustrating a method of generating the counter synchronization signal according to the modified example.
FIG. 8 is a schematic block diagram showing a configuration of an information terminal device according to a modified example 3 of the embodiment.

### BEST MODE FOR CARRYING OUT THE INVENTION

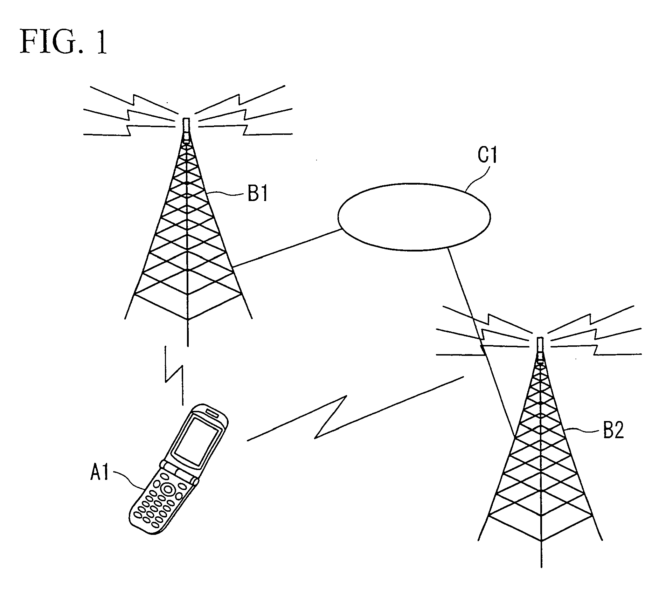

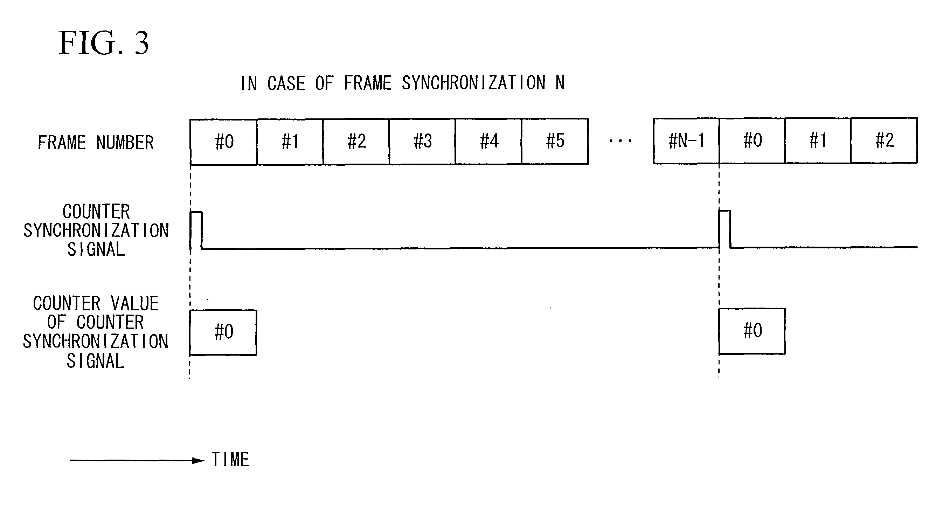

Hereinafter, embodiments of the present invention will be described in detail with reference to the drawings. FIG. 1 is a diagram schematically illustrating the overall image of a communication system according to an embodiment of the present invention.
In the drawing, the communication system includes an information communication terminal A1 (reception device), a base station device B1 (first transmission device), and a base station device B2 (second transmission device). The base station device B1 performs wireless communication using a W-CDMA scheme, and the base station device B2 performs wireless communication using a GSM scheme. The base station device B1 and the base station device B2 are connected via a network C1.
A transmission signal (first transmission signal) of the base station device B1 and a transmission signal (second transmission signal) of the base station device B2 acquire synchronization in a frame, which is a predetermined time unit, and a frame cycle including N frames, where N is a predetermined number (see FIG. 3). The communication system according to the embodiment includes three or more base station devices (not shown), but synchronization need not be acquired between all the base station devices and synchronization may be acquired between some base station devices.

FIG.1 shows that the information terminal device A1 is a mobile terminal device. In the drawing, the information terminal device A1 performs wireless communication with the base station device B1. In the drawing, the information terminal device A1 also performs wireless communication with the base station device B2 by a cell search for searching for a cell of the base station device B2, or the like accompanying movement of its own device. The information terminal device A1 is a device capable of wireless communication with the base station device B1 and the base station device B2, that is, wireless communication using the W-CDMA scheme and the GSM scheme.

### <Configuration of Information Terminal Device a1>

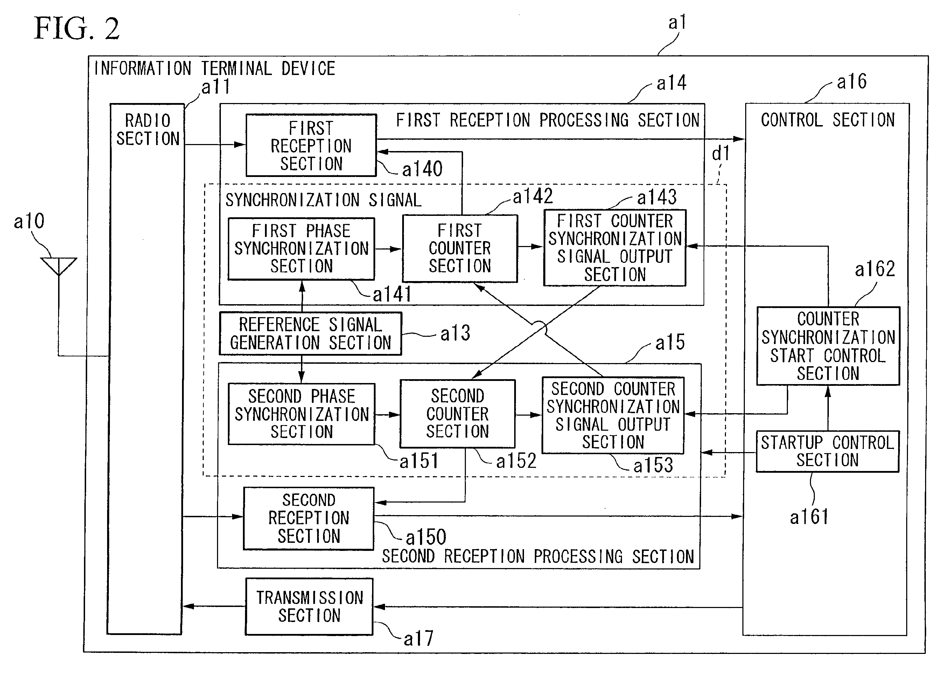

Hereinafter, the configuration of the information terminal device a1 when the information terminal device A1 is the information terminal device a1 will be described. FIG. 2 is a schematic block diagram showing the configuration of the information terminal device a1 according to the embodiment.
The information terminal device a1 includes an antenna a10, a radio section a11, a reference signal generation section a13, a first reception processing section a14, a second reception processing section a15, a control section a16, and a transmission section a17.

The first reception processing section a14 includes a first reception section a140, a first phase synchronization section a141, a first counter section a142, and a first counter synchronization signal output section a143. The second reception processing section a15 includes a second reception section a150, a second phase synchronization section a151, a second counter section a152, and a second counter synchronization signal output section a153.
The first reception processing section a14 and the second reception processing section a15 are respectively implemented by an LSI of one chip. The first reception processing section a14 is an LSI that performs signal reception processing using the W-CDMA scheme, and the second reception processing section a15 is an LSI that performs signal reception processing using the GSM scheme.

The control section a16 includes a startup control section a161 and a counter synchronization start control section a162. The reference signal generation section a13, the first phase synchronization section a141, the first counter section a142, the first counter synchronization signal output section a143, the second phase synchronization section a151, the second counter section a152, and the second counter synchronization signal output section a153 correspond to a synchronization device d1. In addition, the information terminal device a1 includes a generally known function of the information terminal device.

The radio section a11 down-converts a reception signal received from the base station device B1 or B2 via the antenna a10 from a radio frequency signal into a baseband signal. The radio section a11 also outputs the down-converted baseband signal to the first reception processing section a14 and the second reception processing section a15.
The radio section a11 also up-converts a signal input from the transmission section a17 into a radio frequency signal, and transmits the up-converted signal to the base station device B1 or B2 via the antenna a10.

In a state in which the first reception processing section a14 performs reception processing of the W-CDMA scheme, the first reception section a140 divides a reception signal from the base station device B1 among signals input from the radio section a11 into frame units by a synchronization signal indicating a reference timing indicating a boundary of a frame of the reception signal from the base station device B1 as a synchronization signal input from the first counter section a142 to be described later. The reception section a140 selects a frame number by a number indicated by a numerical signal input from the first counter section a142 (hereinafter, referred to as a counter value) and detects a divided frame unit signal. That is, the first reception section a140 detects a transmission signal of the base station device B1 in a frame unit using the numerical signal output by the first counter section a142. The frame number is an ordered number. In the embodiment, the case where the frame number is a periodic number of "#0" to "#N-1" will be described.
The first reception section a140 demodulates the detected signal by the W-CDMA scheme. The first reception section a140 outputs the demodulated data signal to the control section a16.

The reference signal generation section a13 generates a clock frequency signal (hereinafter referred to as a reference signal), and outputs the clock frequency signal to the first phase synchronization section a141 and the second phase synchronization section a151.

The first phase synchronization section a141 performs synthesis processing by processing including multiplying/dividing for a reference signal input from the reference signal generation section a13 using a phase locked loop (PLL). The first phase synchronization section a141 outputs a pulse signal subjected to the synthesis processing to the first counter section a142.

The first counter section a142 counts the pulse signal input from the first phase synchronization section a141. The first counter section a142 counts a frame number at a count interval indicating a frame boundary of a reception signal, and generates a numerical signal indicating a counted counter value (frame number). Information indicating a timing of a frame boundary and its count interval are input from the control section a16 (not shown). The first counter section a142 outputs a numerical signal indicating a counted counter value to the first reception section a140 and the first counter synchronization signal output section a143. That is, the first counter section a142 outputs a numerical signal indicating a number counted by detecting a pulse signal, which is a clock of a frame unit.
Under control of the control section a16, the first counter section a142 generates a synchronization signal indicating a reference timing indicating a frame boundary of a reception signal, and outputs the synchronization signal to the first reception section a140 and the first counter synchronization signal output section a143. The signal is a pulse signal rising at the initiation of each frame of the reception signal from the base station device B1.

The first counter section a142 selects and counts an initial value of the counter value based on the reception signal from the base station device B1. For example, the first counter section a142 pre-associates and pre-stores an arrangement position of a signal such as a synchronization channel and a frame number, and sets a frame number corresponding to an arrangement position of a synchronization channel or the like to an initial value of the counter value if the signal such as the synchronization channel is detected. The control section a16 may detect a frame number by performing the same processing as the above-described first counter section a142, and the first counter section a142 may set the detected frame number to the initial value of the counter value input from the control section a16.

If a counter synchronization signal to be described later has been input from the second counter synchronization signal output section a153 of the second reception processing section a15, the first counter section a142 counts a counter value indicated by the counter synchronization signal as its own initial value. Thereby, the first counter section a142 outputs a numerical signal indicating the same value as the counter value indicated by the numerical signal output by the second counter section a152. That is, the first counter section a142 outputs a numerical signal indicating the same number at the same timing as that of the second counter section a152 based on a counter value indicated by the counter synchronization signal output by the second counter synchronization signal output section a153.

If information indicating that synchronization control from the counter synchronization start control section a162 to be described later has been started is input, the first counter synchronization signal output section a143 starts to output a counter synchronization signal indicating the same value as the counter value of the numerical signal input from the first counter section a142 to the second counter section a152. That is, the first counter synchronization signal output section a143 outputs a counter synchronization signal indicating the same value as the counter value indicated by the numerical signal output by the first counter section a142.
Details of the counter synchronization signal output by the first counter synchronization signal output section a143 will be described later.

In a state in which the second reception processing section a15 performs reception processing of the GSM scheme, the second reception section a150 divides a reception signal from the base station device B2 among signals input from the radio section a11 into frame units by a synchronization signal indicating a reference timing indicating a frame boundary of the reception signal from the base station device B2 as a synchronization signal input from the second counter section a152. The reception section a150 also detects a divided frame unit signal by selecting a frame number by the counter value indicated by the numerical signal input from the second counter section a152. That is, the second reception section a150 detects a transmission signal of the base station device B2 in a frame unit using the numerical signal output by the second counter section a152.
The second reception section a150 demodulates the detected signal by the GSM scheme. The second reception section a150 outputs the demodulated data signal to the control section a16.

Because functions of the second phase synchronization section a151, the second counter-section a152, and the second counter synchronization signal output section a153 of the second reception processing section a15 are respectively the same as those of the first phase synchronization section a141, the first counter section a142, and the first counter synchronization signal output section a143, description thereof is omitted.

Based on data signals input from the first reception section a140 and the second reception section a150, the control section a16 causes an output section such as a screen or a speaker (not shown) to display information or to output a sound. The control section a16 outputs information to be transmitted to the base station devices B1 and B2 among pieces of information input by an input section such as buttons (not shown) to the transmission section a17 as a data signal.

Upon receipt of an instruction of a handover directed to the base station device B2 by a reception signal from the base station device B1, that is, an instruction of a handover from a base station device of the W-CDMA scheme to a base station device of the GSM scheme, the startup control section a161 starts up the second reception processing section a15. That is, the startup control section a161 controls the second counter section a152 to be started up when its own device performs handover processing of switching a communication destination from the base station device B1 to the base station device B2.

The counter synchronization start control section a162 determines whether or not synchronization is acquired in a frame and a frame cycle in transmission signals of the base station device B1 and the base station device B2 by information included in the handover instruction. If it is determined that the synchronization is acquired in the frame and the frame cycle, the counter synchronization start control section a162 starts up the first counter synchronization signal output section a143. That is, the counter synchronization start control section a162 performs synchronization start control when its own device performs handover processing of switching the communication destination from the base station device B1 to the base station device B2.

A configuration that receives an instruction of a handover directed to the base station device B2 has been described in the embodiment, but the present invention is not limited thereto. The information terminal device a1 may determine the presence/absence of execution of the handover based on reception qualities of transmission signals from the base station devices B1 and B2.

The transmission section a17 converts a data signal input from the control section a16 into an analog signal by digital/analog conversion, and outputs the analog signal to the radio section a11.

### <Details of Counter Synchronization Signal>

Hereinafter, details of a counter synchronization signal output by the first counter synchronization signal output section a143 will be described using FIG. 3.
FIG. 3 is an illustrative diagram illustrating an example of the counter synchronization signal according to the embodiment. In the drawing, the horizontal axis is a time axis. The drawing shows the case where a signal in which N frames are one cycle (a frame cycle N) is received.

The first stage drawing of FIG. 3 shows a frame number of a reception signal from the base station device B1. The frame number is the same as a counter value of the first counter section a142. The drawing shows that frame numbers of "#0" to "#N-1" are repeated.

The second stage drawing of FIG. 3 shows a counter synchronization signal output by the first counter synchronization signal output section a143. The drawing shows that the first counter synchronization signal output section a143 outputs the counter synchronization signal in each cycle when the frame number is "#0."

The third stage drawing of FIG. 3 shows a counter value of the counter synchronization signal output by the first counter synchronization signal output section a143. The drawing shows that the counter synchronization signal indicates a counter value "#0."
If the counter synchronization signal of the drawing is input, the second counter section a152 resets the counter value, that is, starts to count it as the counter value "#0."

### <Details of Synchronization Signal>

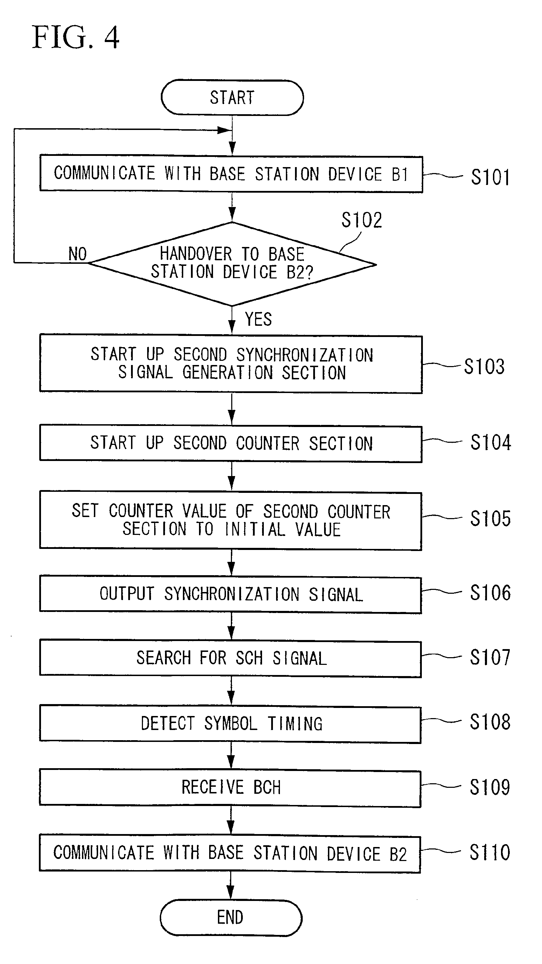

Hereinafter, an operation of the information terminal device a1 will be described using FIG. 4.
FIG. 4 is a flowchart showing the operation of the information terminal device a1 according to the embodiment.

### (Step S101)

The information terminal device a1 is connected to the base station device B1, and is in a communication or communicable state. In the case, the information terminal device a1 detects a reception signal from the base station device B1 using a numerical signal output by the first counter section a142 and a synchronization signal. Thereafter, it moves to step S102.

### (Step S 102)

The control section a16 determines whether or not a handover to the base station device B2 is performed. If the control section a16 determines that the handover to the base station device B2 is performed, it moves to step S103. On the other hand, if the control section a16 determines that the handover to the base station device B2 is not performed, the determination of step S102 is repeated.

### (Step S103)

The startup control section a161 starts up the second reception processing section a15. Thereafter, it moves to step S 104.

### (Step S104)

The counter synchronization start control section a162 starts up the second counter section a152 to cause a numerical signal and a synchronization signal to be output. Thereafter, it moves to step S 105.

### (Step S105)

The first counter synchronization signal output section a143 outputs a counter synchronization signal to the second counter section a152. The second counter section a152 sets a counter value indicated by the counter synchronization signal to its own initial value. Thereafter, it moves to step S106.

### (Step S106)

The second counter section a152 counts from the counter value initialized in step S105, and outputs the numerical signal indicating the counted counter value and the synchronization signal to the second reception section a150. Thereafter, it moves to step S107.

### (Step S107)

The second reception section a150 searches for a synchronization channel (SCH) signal using the counter value indicated by the numerical signal input in step S106 as a frame number. Thereafter, it moves to step S108.

### (Step 108)

The second reception section a150 detects a symbol timing based on the SCH signal searched for in step S107.

### (Step S 109)

The second reception section a150 receives a broadcast channel (BCH) at the symbol timing detected in step S 108. Thereafter, it moves to step S110.

### (Step S110)

Based on information of the BCH received in step S109, the information terminal device a1 is connected to the base station device B2, and is in a communication or communicable state.

According to the embodiment as described above, the synchronization device d1 outputs a counter synchronization signal indicating a counter value of the first counter section a142 in each cycle, and the second counter section a152 outputs a numerical signal indicating the same number at the same timing as that of the first counter section a142 based on the counter value indicated by the counter synchronization signal. Thereby, when the counter value of the first counter section a142 is already used in synchronization with the base station device B1, the synchronization device d1 can set the counter value of the second counter section a152 to the same value as the counter value of the first counter section a142 in a state in which the synchronization is maintained.

According to the embodiment, the information terminal device a1 outputs the counter synchronization signal indicating the counter value of the first counter section a142 in each cycle. The second counter section a152 outputs the numerical signal indicating the same number at the same timing as that of the first counter section a142 based on the counter value indicated by the counter synchronization signal. A transmission signal of the base station device B2 is detected in a frame and a frame cycle using the numerical signal output by the second counter value a152. Thereby, when a transmission signal of the base station device B2 synchronized with a transmission signal of the base station device B1 in the frame and the frame cycle is received, the information terminal device a1 can be synchronized with the transmission signal, even when the frame and the frame cycle are not detected using the transmission signal of the base station device B2, and can shorten a detection time of the frame and the frame cycle.

Because the counter synchronization signal indicating the counter value is output, the synchronization device d1 can set the counter value of the second counter section a152 to the same value as the counter value of the first counter section a142 at any timing. In the case, the information terminal device a1 can start reception processing at any timing.

### <Modified Example 1>

Hereinafter, the modified example 1 of the embodiment will be described. In the modified example, another example of the counter synchronization signal will be described.

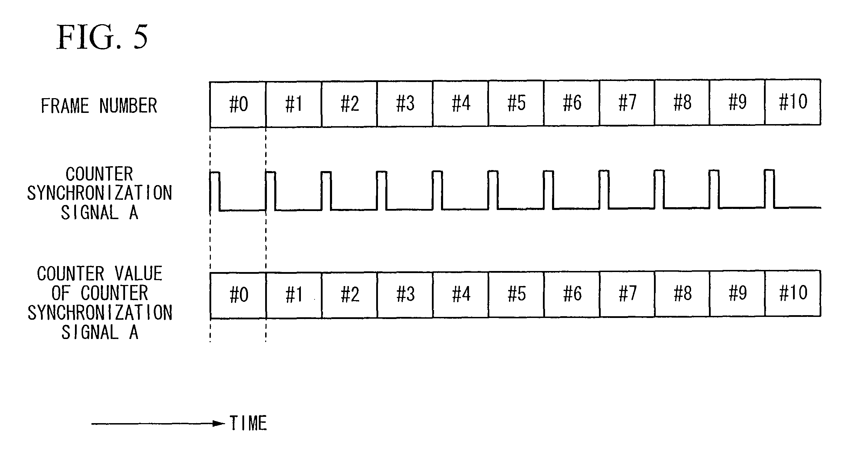

FIG. 5 is an illustrative diagram illustrating another example of the counter synchronization signal according to the modified example 1 of the embodiment. In the drawing, the horizontal axis is a time axis. The drawing shows a counter synchronization signal for one cycle, and the like.

The first stage of FIG. 5 shows a frame number of a reception signal from the base station device B1. The frame number is the same as a counter value of the first counter section a142. The drawing shows that frame numbers of "#0" to "#10" are repeated.

The second stage drawing of FIG. 5 shows a counter synchronization signal A output by the first counter synchronization signal output section a143. The drawing shows that the first counter synchronization signal output section a143 outputs the counter synchronization signal A in each count, that is, each frame.

The third stage drawing of FIG. 5 shows a counter value of the counter synchronization signal A output by the first counter synchronization signal output section a143. The drawing shows that the counter synchronization signal A is the same counter value as the counter value of the first counter section a142. In the case, the second counter section a152 outputs the same value as the counter value of the synchronization signal A as a numerical signal.
The synchronization signal A is the same pulse signal as the numerical signal output by the first counter section a142 to the first reception section a140.

In the modified example as described above, the first counter synchronization signal output section a143 outputs the counter synchronization signal A in each frame. Thereby, the information terminal device a1 can reliably synchronize the counter value in a frame unit because the counter value of the second counter section a152 can be set to the same value as the counter value of the second counter section a142 in each frame.

### <Modified Example 2>

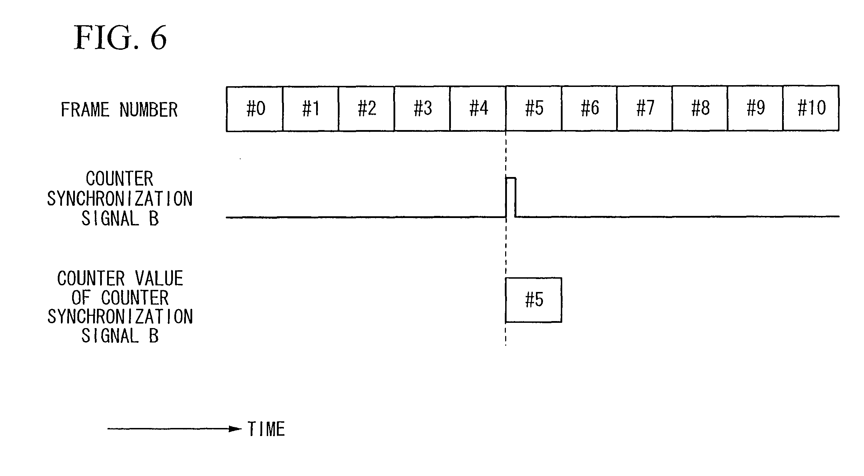

FIG. 6 is an illustrative diagram illustrating another example of the counter synchronization signal according to the modified example 2 of the embodiment. In the drawing, the horizontal axis is a time axis. The drawing shows a counter synchronization signal for one cycle, and the like.

The first stage of FIG. 6 shows a frame number of a reception signal from the base station device B1. The frame number is the same as a counter value of the first counter section a142. The drawing shows that frame numbers of "#0" to "#10" are repeated.

The second stage drawing of FIG. 6 shows a counter synchronization signal B output by the first counter synchronization signal output section a143. The drawing shows that the first counter synchronization signal output section a143 outputs the counter synchronization signal in any frame number "#5" and outputs the counter synchronization signal in each cycle.

The third stage drawing of FIG. 6 shows a counter value of the counter synchronization signal output by the first counter synchronization signal output section a143. The drawing shows that the counter synchronization signal indicates a counter value "#5."
If the counter synchronization signal of the drawing is input, the second counter section a152 starts to count it as the counter value "#5."

According to the modified example as described above, the synchronization device d1 can set the counter value of the second counter section a152 to the same value as the counter value of the first counter section a142 at any timing.

Hereinafter, a method in which the first counter synchronization signal output section a143 generates the counter synchronization signal B from the counter synchronization signal A will be described.

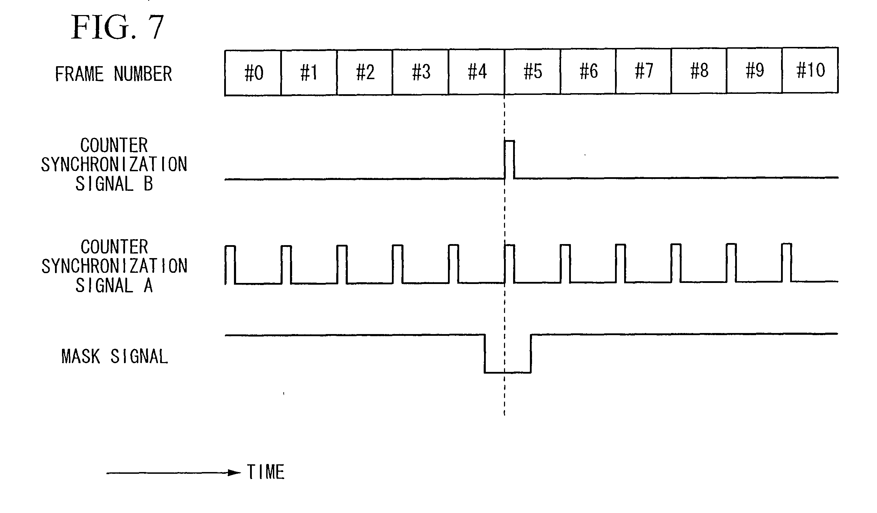

FIG. 7 is an illustrative diagram illustrating a method of generating the counter synchronization signal B according to the embodiment. In the drawing, the horizontal axis is a time axis.

The first stage drawing of FIG. 7 shows a counter value of the first counter section.
The second stage drawing of FIG. 7 shows the counter synchronization signal B of FIG. 6.
The third stage drawing of FIG. 7 shows the counter synchronization signal A of FIG. 5.

The fourth stage drawing of FIG. 7 shows a mask signal. The mask signal indicates that a signal from a center time of a time band in which the counter value of the first counter section is "#4" to a center time of a time band in which the counter value is "#5" is directly output and a signal of the other time is deleted.
FIG. 7 shows that the first counter synchronization signal output section a143 generates the counter synchronization signal B of the second stage drawing of FIG. 7 using the mask signal of the fourth stage drawing of FIG. 7 with respect to the counter synchronization signal A of the third stage drawing of FIG. 7.

In the above-described embodiment, if information indicating that a synchronization control from the counter synchronization start control section a162 has been started is input, the first counter synchronization signal output section a143 may output a counter synchronization signal indicating the same value as the counter value of the numerical signal input from the first counter section a142 to the second counter section a152 only once. That is, if the counter synchronization start control section a162 performs the synchronization start control, the first counter synchronization signal output section a143 outputs the counter synchronization signal to the second counter section a152 once.
Thereby, it is possible to reduce the number of times the synchronization signal is output, and reduce power consumption of the information terminal device a1, as compared with the case where the synchronization signal is output in each frame cycle.

In the above-described embodiment, the counter synchronization signal may be output to the first counter synchronization signal output section a143 or the second counter synchronization signal output section a153 in a given cycle, and the counter values of the first reception processing section a14 and the second reception processing section a15 may be synchronized.
Thereby, for example, a change to a base station device for smooth communication can be made because the counter value of the first counter synchronization signal output section a143 or the second counter synchronization signal output section a153 is synchronized even when communications of the base station device B1 and the base station device B2 are alternated as in the case where reception quality of a reception signal of the base station device B2 to which a handover has been performed is bad and a handover to the base station device B1 is re-performed.

Herein, the given cycle is, for example, a cycle when the information terminal device a1 performs intermittent reception. The cycle may be changed in response to a movement speed of the information terminal device a1. A time, rather than a cycle, may be predetermined, and the counter synchronization signal may be output after the time has elapsed.
In the embodiment, the second reception processing section a15 may be constantly started up.

Any counter value may be stored in a storage section included in the control section a16 determined in advance or the like. The storage section may be arranged outside or inside the LSI implementing the first reception processing section a14 or the second reception processing section a15. If the second counter section a152 sets its counter value to an initial value by referring to the storage section, it is preferable that the counter synchronization signal report only a timing by a synchronization pulse or the like, and a signal indicating the counter value is unnecessary.

### <Modified Example 3>

Hereinafter, the modified example 3 of the embodiment will be described. In the modified example, an example in which the control section includes a counter value storage section, which stores a counter value used in counter synchronization, and the first counter section and the second counter section perform counter synchronization using the counter value stored by the counter value storage section will be described.

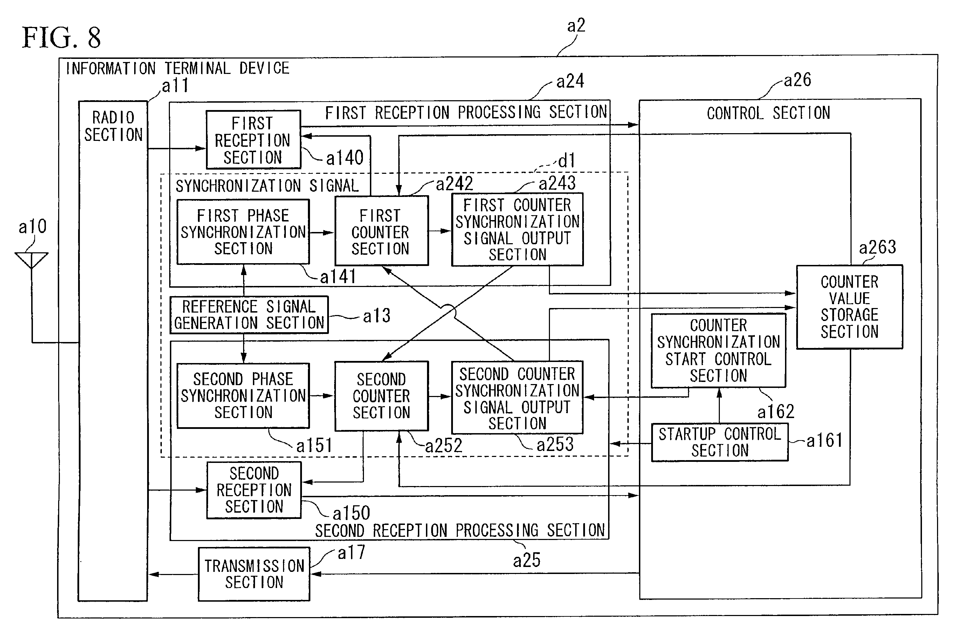

FIG. 8 is a schematic block diagram showing a configuration of an information terminal device a2 according to the modified example of the embodiment. If the information terminal device a2 (FIG. 8) according to the modified example is compared with the information terminal device a1 (FIG. 2) according to the embodiment, a first reception processing section a24, a second reception processing section a25, and a control section a26 are different. However, configurations and functions of the other components (the antenna a10, the radio section a11 the reference signal generation section a13, and the transmission section a17) are the same as those of the information terminal device a1.

A first counter synchronization signal output section a243 and a first counter section a142 of the first reception processing section a24 are different from those of the information terminal device a1, but functions of the first reception section a140 and the first phase synchronization section a141 are the same as those of the first embodiment. A second synchronization signal output section a253 and a second counter section a252 of the second reception processing section a25 are different from those of the information terminal device a1, but functions of the second reception section a150 and the second phase synchronization section a151 are the same as those of the first embodiment. A counter value storage section a263 of the control section a16 is different from that of the information terminal device a1, but functions of the startup control section a161 and the counter synchronization start control section a162 are the same as those of the first embodiment. Description of the same functions as those of the first embodiment is omitted.

The first counter synchronization signal output section a243 causes the counter value storage section a263 of the control section a26 to store the same value as a counter value of a numerical signal input from the first counter section a142. The first counter synchronization signal output section a243 outputs a pulse signal (timing signal) indicating an input timing of the numerical signal, that is, the same signal as the pulse signal input from the first counter synchronization signal output section a243 to the first counter section a242, to the second counter section a252. Here, the first counter synchronization signal output section a243 may process numerical signals of some counter values determined in advance among numerical signals input from the first counter section a142 (see FIGS. 3 and 6), and process all counter values (see FIG. 5).

The first counter section a242 counts a pulse of a pulse signal input from the first phase synchronization section a141, and generates a numerical signal indicating a counted counter value (frame number). The first counter section a242 outputs the numerical signal indicating the counted counter value to the first reception section a140 and the first counter synchronization signal output section a243.
The first counter section a242 selects and counts an initial value of a counter value based on a reception signal from the base station device B1. Specifically, if a pulse signal has been input from the second counter synchronization signal output section a253 of the second reception processing section a15, the first counter section a242 counts the counter value stored by the counter value storage section a263 of the control section a26 as its own initial value. Thereby, the first counter section a253 outputs a numerical signal indicating the same value as a counter value indicated by a numerical signal output by the second counter section a252.

Because functions of the second counter synchronization signal output section a253 and the second counter section a252 are respectively the same as those of the first counter synchronization signal output section a243 and the first counter section a242, description thereof is omitted.

Parts of the information terminal device a1 according to the above-described embodiment, for example, the first reception section a140, the second reception section a150, the first phase synchronization section a141, the first counter section a142, the first counter synchronization signal output section a143, the second phase synchronization section a151, the second counter section a152, the second counter synchronization signal output section a153, the startup control section a161, the counter synchronization start control section a162, the control section a16, and the transmission section a17 may be implanted by a computer. In the case, it may be implemented by recording a program for implementing a control function on a computer readable recording medium and enabling a computer system to read and execute the program recorded on the recording medium. The "computer system" used herein includes an OS and hardware, such as peripheral devices in a computer system built in the information terminal device a1. The "computer readable recording medium" is a portable medium such as a flexible disk, magneto-optical disc, ROM and CD-ROM, and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be one for implementing part of the above functions, or the above functions may be implemented in combination with a program already recorded on the computer system.

The embodiments of the present invention have been described in detail with reference to the drawings. However, specific configurations are not limited to the embodiments and may include any design in the scope without departing from the subject matter of the present invention.

### Industrial Applicability

The present invention is suitable for use in a synchronization device, a reception device, and technologies similar thereto. If a counter value of one clock counter is already used in synchronization, it is possible to acquire synchronization with a counter value of the other clock counter in a state in which the synchronization is maintained.

### Reference Symbols

A1, a1 : Information terminal device
B1, B2: Base station device
a 10: Antenna
a13: Reference signal generation section
a14: First reception processing section
a15: Second reception processing section
a16: Control section
a17: Transmission section
d1: Synchronization device
a140: First reception section
a141: First phase synchronization section
a142, a242: First counter section
a143, a243: First counter synchronization signal output section
a150: Second reception section
a151: Second phase synchronization section
a152, a252: Second counter section
a153, a253: Second counter synchronization signal output section
a161: Startup control section
a162: Counter synchronization start control section
a163: Counter value storage section

## Claims

1. A synchronization device comprising a plurality of counter sections each outputting a numerical signal indicating a counted number by detecting a clock, the synchronization device comprising:
a first counter section which outputs the numerical signal;
a counter synchronization signal output section which outputs a counter synchronization signal indicating the same number as the number indicated by the numerical signal output by the first counter section; and
a second counter section which outputs a numerical signal indicating the same number at the same timing as that of the first counter section based on the number indicated by the counter synchronization signal output by the counter synchronization signal output section.

2. A reception device, which receives a first transmission signal transmitted from a first transmission device and a second transmission signal transmitted from a second transmission device by acquiring synchronization of a time unit with the first transmission signal as a second transmission signal configured in the same time unit as that of the first transmission signal, the reception device comprising:
a first counter section which outputs a numerical signal indicating a counted number by detecting a clock of the time unit;
a counter synchronization signal output section which outputs a counter synchronization signal indicating the same number as the numerical signal output by the first counter section;
a second counter section which outputs a numerical signal indicating the same number at the same timing as that of the first counter section based on the number indicated by the counter synchronization signal output by the counter synchronization signal output section;
a first reception section which detects the first transmission signal in the time unit using the numerical signal output by the first counter section; and
a second reception section which detects the second transmission signal in the time unit using the numerical signal output by the second counter section.

3. The reception device according to claim 2, wherein:
the counter synchronization signal output section outputs a timing signal indicating a synchronization timing to the second counter section, and causes a counter value storage section to store the same number as the number indicated by the numerical signal output by the first counter section, and
the second counter section outputs the numerical signal indicating the number stored in the counter value storage section at the synchronization timing indicated by the timing signal.

4. The reception device according to claim 2, wherein:
the reception device receives the transmission signals repeated cyclically in a predetermined number of the time units,
the first counter section outputs a numerical signal indicating the cyclically counted number, and
the counter synchronization signal output section outputs the counter synchronization signal in each cycle.

5. The reception device according to claim 4, wherein the counter synchronization signal output section outputs the counter synchronization signal indicating a first counted number of the cycle.

6. The reception device according to claim 2, wherein the counter synchronization signal output section outputs the counter synchronization signal in each time unit.

7. The reception device according to claim 2, comprising:
a counter synchronization start control section which performs synchronization start control to cause the second counter section to start to output the numerical signal when the reception device performs handover processing of switching a communication destination from the first transmission device to the second transmission device,
wherein the counter synchronization signal output section outputs the counter synchronization signal to the second counter section when the counter synchronization start control section performs the synchronization start control.

8. The reception device according to claim 7, wherein the counter synchronization signal output section outputs the counter synchronization signal to the second counter section once.

9. The reception device according to claim 7, comprising:
a startup control section which controls the second counter section to be started up when the reception device performs handover processing of switching a communication destination from the first transmission device to the second transmission device.

10. A synchronization method for use in a synchronization device comprising a plurality of counter sections each outputting a numerical signal indicating a counted number by detecting a clock, the synchronization method comprising:
a first process of outputting, by the synchronization device, the numerical signal;
a second process of outputting, by the synchronization device, a counter synchronization signal indicating the same number as the number indicated by the numerical signal output in the first process; and
a third process of outputting, by the synchronization device, a numerical signal indicating the same number at the same timing as that of the first process based on the number indicated by the counter synchronization signal output in the second process.

11. A reception method for use in a reception device, which receives a first transmission signal transmitted from a first transmission device and a second transmission signal transmitted from a second transmission device by acquiring synchronization of a time unit with the first transmission signal as a second transmission signal configured in the same time unit as that of the first transmission signal, the reception method comprising:
a first process of outputting a numerical signal indicating a counted number by detecting a clock of the time unit;
a second process of outputting a counter synchronization signal indicating the same number as the numerical signal output in the first process;
a third process of outputting a numerical signal indicating the same number at the same timing as that of the first process based on the number indicated by the counter synchronization signal output in the second process;
a fourth process of detecting the first transmission signal in the time unit using the numerical signal output in the first process; and
a fifth process of detecting the second transmission signal in the time unit using the numerical signal output in the third process.
